# EUROPEAN PATENT SPECIFICATION

(11) **EP 2 940 281 B1**
(45) Date of publication and mention of the grant of the patent: **11.04.2018**
(21) Application number: 13875482.5
(22) Date of filing: 20.02.2013
(51) Int. Cl.: F02F 1/24

(54) **CYLINDER HEAD AND ENGINE**
ZYLINDERKOPF UND MOTOR
CULASSE ET MOTEUR

(43) Date of publication of application: 04.11.2015
(73) Proprietor: Mitsubishi Heavy Industries, Ltd., Tokyo 108-8215 (JP)
(72) Inventor: FURUKAWA, Yuta, Tokyo 108-8215 (JP); OGURA , Kazuo, Tokyo 108-8215 (JP)
(74) Representative: Hoffmann Eitle
(86) International application number: PCT/JP2013/054173
(87) International publication number: WO 2014/128862

(56) References cited:
- EP-A1- 2 108 788
- JP-A- 2009 057 830
- JP-U- S6 191 046
- JP-U- S6 191 046
- JP-U- S58 137 804

## Description

### [Technical Field]

The present invention relates to an engine including a cylinder head.

### [Background Art]

A gas engine performing combustion operation using a gas fuel (fuel gas) such as natural gas or municipal gas is known as an exemplary engine. Such a gas engine can obtain high efficiency and high output, and thus is widely used for engines for continuous and emergency power generation, engines for construction machinery, engines mounted in ships, railroads, or the like.

In the gas engine, a fuel gas is supplied to air introduced from an intake pipe, and thereby a gas mixture composed of the air and the fuel gas is created. This gas mixture is compressed by a compressor of a supercharger, has its flow rate adjusted by a throttle valve, and then is supplied to a combustion chamber via an intake port. Then, the gas mixture is ignited in the combustion chamber, and thereby the combustion operation is performed. An exhaust gas is discharged via an exhaust port. Further, the intake port and the exhaust port are each formed in a cylinder head.

As the gas engine, a gas engine having a cylinder head equipped with an auxiliary chamber for ignition has been known (e.g., see Japanese Unexamined Patent Application, First Publication No. 2004-251213). In this gas engine, when a cylinder of a gas engine body approximates a top dead center for compression, a gas of the auxiliary chamber is ignited by sparks of a spark plug in the auxiliary chamber. Thereby, generated flames are ejected into a main combustion chamber, and a fuel-air mixture in the main combustion chamber is ignited. Thereby, the combustion operation is performed.

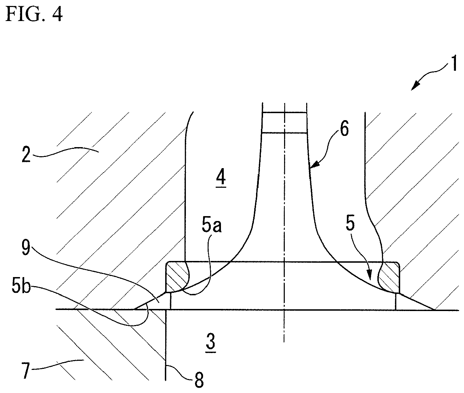

Here, a partial longitudinal sectional view of a gas engine 1 is shown in Fig. 4. A cylinder head 2 of the gas engine 1 is formed with an intake port 4 that is opened toward a combustion chamber 3. An opening 5 of the intake port 4 is formed with a seat surface 5 a with which an outer circumferential surface of an intake valve 6 comes into contact. Also, a portion of the opening 5 of the intake port 4 wherein the portion is closer to the side of the combustion chamber 3, than the seat surface 5a, is formed with a tapered surface 5b that is increased in diameter toward the combustion chamber 3 in order to secure a flow coefficient.

EP 2 108 788 A1, JP S58 137804 U and JP S61 91046 U disclose the pre-characterizing features of claim 1 and represent the closest prior art.

### [Summary of Invention]

### [Technical Problem]

In this gas engine 1 according to Fig. 4, to greatly secure a diameter of the intake valve 6, the intake valve 6 is located immediately adjacent to the inside of an inner wall surface 8 of a cylinder block 7 defining the combustion chamber 3. For this reason, an opening edge of the tapered surface 5b located closer to the side of the combustion chamber 3, than the seat surface 5a, against which the intake valve 6 abuts, is partly located at a radial outer side of the inner wall surface 8 relative to the inner wall surface 8 of the cylinder block 7.

For this reason, a part of an inner space of the tapered surface 5b in the opening 5 of the intake port 4 becomes a separation space 9 separated from the combustion chamber 3. Since the flames of the combustion chamber 3 is insufficient for the separation space 9, there is a problem that a volume of the separation space 9 does not contribute to combustion, which causes a reduction in combustion efficiency.

The present invention has been made in consideration of the above circumstances and an object of the present invention is to provide an engine with a cylinder head capable of improving combustion efficiency.

### [Solution to Problem]

This object is solved by an engine with the features of claim 1. The present invention employs the following means in order to solve the above problem.

That is, a cylinder head of the engine according to the present invention includes a cylinder head body provided with intake and exhaust ports opened toward a combustion chamber and capable of being closed by valves, the intake and exhaust ports being separated from each other in a circumferential direction around a cylinder central axis; wherein an opening section of at least one of the intake and exhaust ports facing the combustion chamber is provided with a seat surface centered on a valve axis and a tapered surface disposed closer to the combustion chamber than the seat surface, the tapered surface being gradually increased in diameter as close to the combustion chamber, and a central axis of the tapered surface is disposed eccentrically from the valve axis toward the cylinder central axis..

According to the cylinder head having this characteristic, since the central axis of the tapered surface is located closer to the cylinder central axis than that of the seat surface, the occurrence of the unnecessary increase in volume that does not contribute to combustion at an opening section of the intake or exhaust port can be suppressed.

The engine of the present invention includes the cylinder head and a cylinder block having an inner wall surface forming the combustion chamber along with the cylinder head.

According to this engine, although an inner diameter of the inner wall surface of the cylinder head is not increased, the occurrence of the unnecessary increase in volume that does not contribute to combustion at the opening section of the intake or exhaust port can be suppressed. Combustion efficiency can be improved while achieving compactness.

In the engine, the tapered surface is positioned inside the inner wall surface of the cylinder block when viewed in the cylinder axis of the engine.

Thereby, the occurrence of the unnecessary increase in volume that does not contribute to combustion in an inner space of the tapered surface at the opening section of the intake or exhaust port can be suppressed.

### [Effects of Invention]

According to the engine of the present invention, since the occurrence of the unnecessary increase in volume that does not contribute to combustion in the inner space of the tapered surface at the opening section of the intake or exhaust port can be suppressed, the combustion efficiency can be improved.

### [Brief Description of Drawings]

Fig. 1 is a longitudinal sectional view of a gas engine according to an embodiment of the present invention.
Fig. 2 is an enlarged view of an opening section of an intake port in the gas engine of Fig. 1.
Fig. 3 shows a cylinder head in the gas engine of Fig. 1 when viewed from a direction of a cylinder central axis.
Fig. 4 is a longitudinal sectional view of a conventional gas engine.

### [Description of Embodiments]

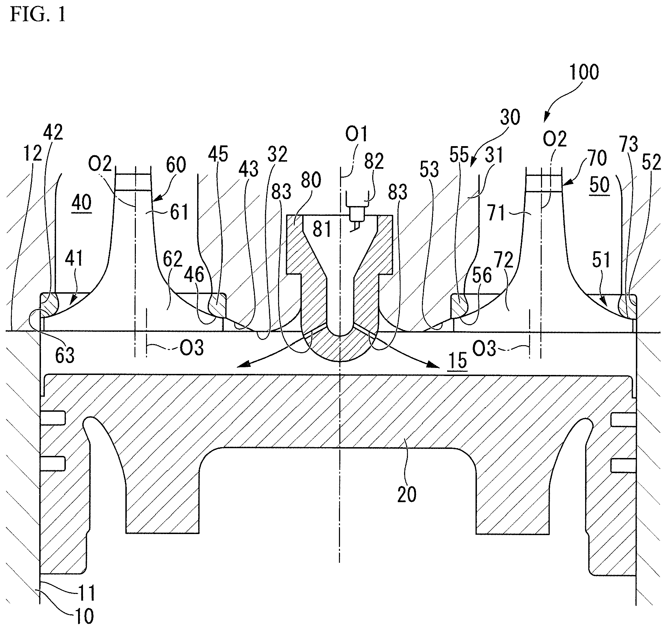

Hereinafter, a gas engine (engine) 100 of an embodiment of the present invention will be described with reference to Figs. 1 to 3.

As shown in Fig. 1, the gas engine 100 is equipped with a cylinder block 10, a piston 20, a cylinder head 30, an antechamber cap 80, intake valves 60, and exhaust valves 70.

The cylinder block 10 is a tubular member extending in a direction of a cylinder central axis O1. An inner wall surface 11 of the cylinder block 10 has a circular cross section perpendicular to the cylinder central axis O1, and is shaped as a cylindrical surface whose inner diameter is uniform in the direction of the cylinder central axis O1.

The piston 20 is configured to close the side of one end (lower side in Fig. 1) of the cylinder block 10 and is disposed inside the cylinder block 10. The piston 20 is disposed to enable reciprocation in the direction of the cylinder central axis O1. The piston 20 is connected to one end of a connecting rod (not shown), and the other end of the connecting rod is connected to a crankshaft (not shown). Thereby, the reciprocation of the piston 20 is transmitted as rotational motion to the crankshaft via the connecting rod.

The cylinder head 30 is a member disposed at the other end (upper side in Fig. 1) of the cylinder block 10. The cylinder head 30 has a cylinder head body 31 shaped as a lid closing the side of the other end of the cylinder block 10. A surface of the cylinder head body 31 which faces the side of the cylinder block 10 becomes a roof surface 32 having a flat shape perpendicular to the cylinder central axis O1. The roof surface 32 of the cylinder head body 31 abuts an end face 12 of the cylinder block 10. Thereby, the cylinder head body 31 is integrally fixed to the cylinder block 10.

Thus, a combustion chamber 15 is defined in the cylinder block 10 by the roof surface 32 of the cylinder head body 31, the inner wall surface 11 of the cylinder block 10, and the piston 20.

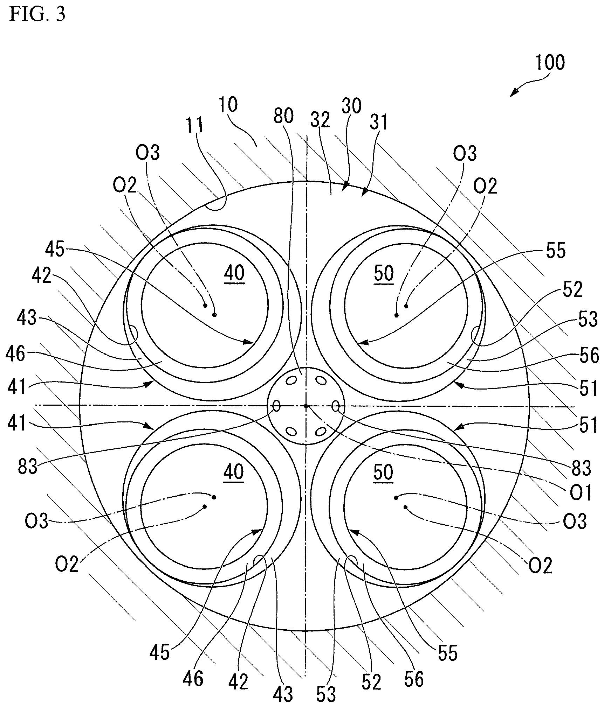

The roof surface 32 of the cylinder head 30 is formed with intake ports 40 and exhaust ports 50, both of which are opened toward the combustion chamber 15, so as to pass through the cylinder head 30. In the present embodiment, as shown in Fig. 3, the intake ports 40 and the exhaust ports 50 are each formed in a pair. The intake ports 40 and the exhaust ports 50 are disposed at intervals in a circumferential direction around the cylinder central axis O1. The pair of intake ports 40 is disposed to be adjacent to each other in the circumferential direction around the cylinder central axis O1. The pair of exhaust ports 50 is also disposed to be adjacent to each other in the circumferential direction around the cylinder central axis O1.

Ends (not shown) of the intake ports 40 which are located at the side opposite to the side of the combustion chamber 15 are connected to a gas mixture passage (not shown), and a gas mixture of air and a combustion gas is supplied to the intake ports 40 via the gas mixture passage.

Ends (not shown) of the exhaust ports 50 which are located at the side opposite to the side of the combustion chamber 15 are connected to an exhaust gas passage (not shown), and an exhaust gas of the gas mixture provided for combustion in the combustion chamber 15 is discharged outside via the exhaust gas passage.

The antechamber cap 80 is disposed to be buried in the center of the roof surface 32 of the cylinder head 30, and a part thereof protrudes inside the combustion chamber 15. The antechamber cap 80 is formed centered on the cylinder central axis O1, and a hollow portion inside thereof becomes an antechamber 81. Further, the antechamber cap 80 is formed with a plurality of ejection holes 83 that allow the antechamber 81 and the combustion chamber 15 to communicate with each other.

An antechamber gas is supplied to the antechamber 81 in the antechamber cap 80 via an antechamber gas passage (not shown). Further, the antechamber 81 is provided with a spark plug 82 that generates sparks. The antechamber gas in the antechamber 81 is ignited by the sparks of the spark plug 82, and thereby generated flames are ejected into the combustion chamber 15 via the ejection holes 83.

The intake valves 60 and the exhaust valves 70 are valves that reciprocate in directions of respective valve axes O2 and thereby open and close the intake ports 40 and the exhaust valves 70. The intake valves 60 are provided inside the intake ports 40. The intake valves 60 are capable of being closed the intake ports 40. The exhaust valves 70 are provided inside the exhaust ports 50. The exhaust valves 70 are capable of being closed the exhaust ports 50. In the present embodiment, the valve axes O2 of the intake valves 60 and the exhaust valves 70 are located in the intake ports 40 and the exhaust ports 50 respectively. The valve axes O2 of the intake valves 60 and the exhaust valves 70 are parallel to the cylinder central axis O1.

The intake valves 60 and the exhaust valves 70 have valve stems 61 and 71 and valve faces 62 and 72 that are formed centered on the respective valve axes O2.

The valve stems 61 and 71 are rod-like members extending along the valve axes O2. The valve stems 61 and 71 enable reciprocation along stem guides (not shown) formed in the cylinder head 30 in the directions of the axes O2.

Also, the valve faces 62 is integrally provided at end of the valve stems 61 which is located at one side in the direction of the valve axis O2, that is, at the side of the combustion chamber 15. The valve faces 72 is integrally provided at end of the valve stems 71 which is located at one side in the direction of the valve axis O2, that is, at the side of the combustion chamber 15. The valve faces 62 and 72 are outer circumferential surfaces thereof become face surfaces 63 and 73, each of which is gradually increased in diameter toward the one side in the direction of the valve axis O2.

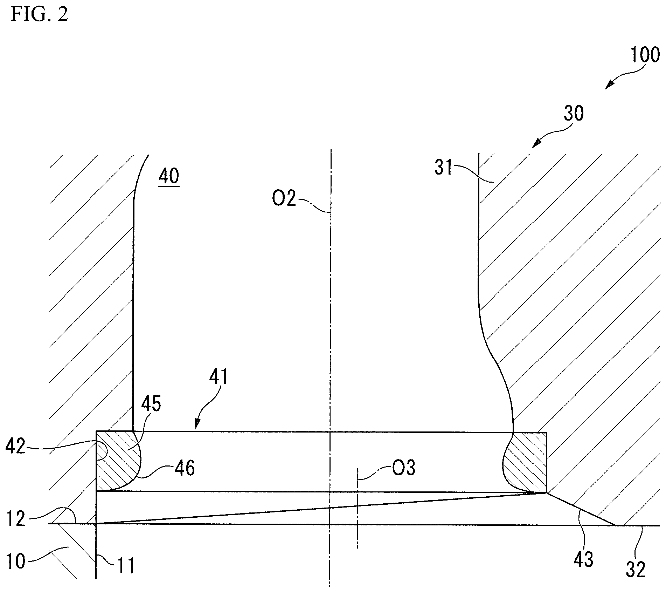

Here, opening sections 41 and 51 of the intake valve 60 and the exhaust valve 70, which face the combustion chamber 15, are formed with seat surfaces 46 and 56 and tapered surfaces 43 and 53, respectively. An enlarged view of the opening section 41 of the intake port 40 is shown in Fig. 2, but the exhaust port 50 also has the same constitution.

The seat surfaces 46 and 56 are surfaces on which the face surfaces 63 and 73 of the intake and exhaust valves 60 and 70 abut throughout the circumferential areas around the valve axes O2. The seat surfaces 46 and 56 of the present embodiment are formed on the valve seats 45 and 55 fitted into the opening sections 41 and 51.

That is, the opening sections 41 and 51 of the intake port 40 and the exhaust port 50 are formed with cylindrical surfaces 42 and 52, in each of which a cross-sectional shape perpendicular to the valve axis O2 is circularly centered on the valve axis O2, and each of which extends with the same inner diameter in the direction of the valve axis O2. Thus, the valve seats 45 and 55 shaped as a ring are configured to be fitted onto the cylindrical surfaces 42 and 52 and are integrally fixed to the cylindrical surfaces 42 and 52. Thereby, inner circumferential surfaces of the valve seats 45 and 55 become the seat surfaces 46 and 56, each of which is gradually increased in diameter toward the one side in the direction of the valve axis O2 so as to be curved.

The face surfaces 63 and 73 of the intake and exhaust valves 60 and 70 come into contact with the seat surfaces 46 and 56 at the side of the combustion chamber 15, i.e. at the one side in the direction of the valve axis O2, throughout the circumferential area. In this way, in the state in which the face surfaces 63 and 73 and the seat surfaces 46 and 56 come into contact with each other, the inside of the combustion chamber 15 and the inside of the intake port 40 are separated from each other by the intake valve 60, and the inside of the combustion chamber 15 and the inside of the exhaust port 50 are separated from each other by the exhaust valve 70. That is, the face surfaces 63 and 73 come into contact with the seat surfaces 46 and 56 of the intake and exhaust ports 40 and 50, and thereby the intake port 40 and the exhaust port 50 are in an open state.

On the other hand, when the intake valve 60 and the exhaust valve 70 are separated to the one side in the direction of the valve axis O2 in this state, the inside of the combustion chamber 15 and the inside of the intake port 40, and the inside of the combustion chamber 15 and the inside of the exhaust port 50 are forced to communicate with each other via a gap between the intake valve 60 and the seat surface 46 and a gap between the exhaust valve 70 and the seat surface 56. That is, the face surfaces 63 and 73 are separated from the seat surfaces 46 and 56 of the intake and exhaust ports 40 and 50, and thereby the intake port 40 and the exhaust port 50 are in an open state.

The tapered surfaces 43 and 53 are formed closer to the combustion chamber 15 than the face surfaces 63 and 73, and have a tapered shape in which they are gradually increased in diameter toward the combustion chamber 15. Central axes 03 of the tapered surfaces 43 and 53 are disposed eccentrically from the valve axes O2 toward the cylinder central axis O1. That is, the central axes O3 of the tapered surfaces 43 and 53 are located closer to the cylinder central axis O1 than the valve axes O2.

As shown in Fig. 3, maximum inner diameters of the tapered surfaces 43 and 53, i.e. inner diameters of intersecting ridgelines between the tapered surface 43 and the roof surface 32 and between the tapered surface 53 and the roof surface 32, are set to be greater than those of the cylindrical surfaces 42 and 52. Also, open edges of the tapered surfaces 43 and 53 which are the intersecting ridge lines have inner diameters in such a manner that portions at the side most separated from the cylinder central axis O1 (i.e., ends at a radial outer side of the cylinder central axis O1) abut the cylindrical surfaces 42 and 52 when viewed from the direction of the cylinder central axis O1.

Further, when viewed from the direction of the cylinder central axis O1, the tapered surfaces 43 and 53 are disposed to be present at a radial inner side of the inner wall surface 11 of the cylinder block 10.

Such tapered surfaces 43 and 53 can be easily formed by fixing cutting tools above axes becoming the central axes O3 of the tapered surfaces 43 and 53, i.e. axes offset from the valve axes O2 toward the cylinder central axis O1, and spinning the cutting tools.

Next, operations of the gas engine 100 and the cylinder head 30 that have the aforementioned constitutions will be described.

During operation of the gas engine 100, the intake ports 40 are in an open state during an intake stroke, and thereby a gas mixture is introduced into the combustion chamber 15. Next, in a compression process, the intake ports 40 are closed by the intake valve 60, and the piston 20 moves toward the cylinder head 30. Thereby, the gas mixture of the combustion chamber 15 is compressed. Afterwards, in a combustion stroke, an antechamber gas in the antechamber 81 is ignited, and the resultant flames are ejected into the combustion chamber 15 via the ejection holes 83. Thereby, the gas mixture of the combustion chamber 15 is combusted. Thus, as a result of the combustion of the gas mixture, the piston 20 is pressed toward the side separated from the cylinder head 30. Then, in an exhaust stroke, the exhaust ports 50 are in an open state, and an exhaust gas of the combustion chamber 15 is discharged outside the gas engine 100.

The intake stroke, the compression stroke, the combustion stroke, and the exhaust stroke are repeatedly performed, and thereby reciprocation of the piston 20 is continuously performed.

According to the gas engine 100 equipped with the aforementioned cylinder head 30, since the central axes O3 of the tapered surfaces 43 and 53 of the opening sections 41 and 51 of the intake and exhaust ports 40 and 50 are disposed eccentrically from the valve axes O2 toward the cylinder central axis O1, the occurrence of the unnecessary increase in volume that does not contribute to combustion in the gas engine 100 can be suppressed.

That is, for example, when the open edges of the tapered surfaces 43 and 53 are partly protruded to a radial outer side relative to the inner wall surface 11 of the cylinder block 10, a space is formed between the tapered surface 43 and the end face 12 of the cylinder block 10 and between the tapered surface 53 and the end face 12 of the cylinder block 10. When the intake valves 60 and the exhaust valves 70 are closed, such spaces are isolated from a combustion space by the intake valve 60 and the exhaust valve 70. Accordingly, even if the gas mixture is present in the isolated spaces, the gas mixture is not used for the combustion.

In contrast, in the present embodiment, since the tapered surfaces 43 and 53 can be inhibited from protruding to the radial outer side relative to the inner wall surface 11 of the cylinder block 10 due to the eccentricity of the central axes O3 of the tapered surfaces 43 and 53, volumes of the spaces isolated from the combustion chamber 15 can be reduced by the intake valve 60 and the exhaust valve70 during the combustion stroke.

Thereby, the volumes of the spaces that do not contribute to the combustion, i.e., the spaces in which the gas mixture is not ignited despite the presence of the gas mixture, can be minimized. Thus, it is possible to avoid reducing combustion efficiency.

Here, it is thought that, when the inner diameter of the inner wall surface 11 of the cylinder block 10 is increased, the occurrence of the unnecessary increase in volume that does not contribute to combustion can be suppressed, s even when the tapered surfaces 43 and 53 are not disposed eccentrically. However, in this case, the enlargement of the combustion chamber 15 results in the increase of the size of the gas engine 100, and the result thereof is not preferable. In the present embodiment, the central axes O3 of the tapered surfaces 43 and 53 are disposed eccentrically toward the cylinder central axis O1, and thereby the unnecessary volume can be reduced although the inner diameter of the inner wall surface 11 of the cylinder block 10 is not increased. Accordingly, the combustion efficiency can be improved while maintaining compactness of the gas engine 100.

Further, as in the present embodiment, the tapered surfaces 43 and 53 are disposed at the radial inner side of the inner wall surface 11 of the cylinder block 10. Thereby, the occurrence of the unnecessary increase in volume can be reliably prevented. Thereby, the entire gas mixture in the combustion space can contribute to the combustion, and the combustion efficiency can be maximized.

Although a preferred embodiment of the present invention has been described, the present invention is not limited thereto, and can be appropriately modified.

- 1: gas engine
- 2: cylinder head
- 3: combustion chamber
- 4: intake port
- 5: opening
- 5a: seat surface
- 5b: tapered surface
- 6: intake valve
- 7: cylinder block
- 8: inner wall surface
- 10: cylinder block
- 11: inner wall surface
- 12: end face
- 15: combustion chamber
- 20: piston
- 30: cylinder head
- 31: cylinder head body
- 32: roof surface
- 40: intake port
- 41: opening section
- 42: cylindrical surface
- 43: tapered surface
- 45: valve seat
- 46: seat surface
- 50: exhaust port
- 51: opening section
- 52: cylindrical surface
- 53: tapered surface
- 55: valve seat
- 56: seat surface
- 60: intake valve (valve)
- 61: valve stem
- 62: valve face
- 63: face surface
- 70: exhaust valve (valve)
- 71: valve stem
- 72: valve face
- 73: face surface
- 100: gas engine
- O1: cylinder central axis
- O2: valve axis
- O3: central axis

## Claims

1. An engine (1) comprising:
a cylinder head body (31) provided with intake (40) and exhaust ports (50) opened toward a combustion chamber (15) and capable of being closed by valves (60, 70), the intake and exhaust ports (40, 50) being separated from each other in a circumferential direction around a cylinder central axis (O1);
opening sections (41, 51) of the intake (40) and exhaust ports (50) facing the combustion chamber (15) which are each provided with cylindrical surfaces (42, 52) which extend with the same inner diameter in a direction of a valve axis (O2) centered on the valve axis (O2);
valve seats (45, 55) each shaped as a ring and configured to be fitted onto the cylindrical surfaces (42, 52), in which inner circumferential surfaces of the valve seats (45, 55) become seat surfaces (46, 56) centered on the valve axis (O2);
tapered surfaces (43, 53) provided to the opening sections (41, 51) and disposed closer to the combustion chamber (15) than the seat surfaces (46, 56), the tapered surfaces (43, 53) being gradually increased in diameter toward the combustion chamber (15), and
a roof surface (32) which faces a side of a cylinder block (10) of the cylinder head body (31), and has a flat shape perpendicular to the cylinder central axis (O1),
wherein a central axis (O3) of the tapered surface (43) is disposed eccentrically from the valve axis (O2) toward the cylinder central axis (O1), and
the engine (1) further comprises the cylinder block (10) having an inner wall surface (11) which forms the combustion chamber (15) along with a cylinder head (30), wherein inner diameters of open edges of the tapered surfaces (43, 53) which are intersecting ridgelines between the tapered surfaces (43, 53) and a roof surface (32) of the cylinder head (30) are set to be greater than inner diameters of the cylindrical surfaces (42, 52), wherein the roof surface (32) of the cylinder head body (31) abuts an end face (12) of the cylinder block (10); and wherein the tapered surfaces (43, 53) are disposed to be present at a radial inner side of the inner wall surface (11) of the cylinder block (10) when viewed in the cylinder central axis (O1) of the engine (1); **characterized in that**
in all of the intake (40) and exhaust ports (50), the open edges of the tapered surfaces (43, 53) abut the cylindrical surfaces (42, 52) at most separated portions from the cylinder central axis (O1) when viewed in the cylinder central axis (O1) of the engine (1); and
an antechamber cap (80) is disposed in a center of the roof surface (32) of the cylinder head body (31) and provided with ejection holes (83) through which flames are ejected into the combustion chamber (15), the flames being caused by ignition of an antechamber gas supplied to an inner hollow portion of the antechamber cap (80).

## Patentansprüche

1. Motor (1), umfassend:
einen Zylinderkopfkörper (31), mit Ansaug-(40) und Abgasanschlüssen (50) bereitgestellt, die in Richtung einer Verbrennungskammer (15) geöffnet und in der Lage sind, durch Ventile (60, 70) geschlossen zu werden, wobei die Ansaug- und Abgasanschlüsse (40, 50) voneinander in einer Umfangsrichtung um eine Zylindermittelachse (O1) getrennt sind;
Öffnungsabschnitte (41, 51) der Ansaug- (40) und Abgasanschlüsse (50), die der Verbrennungskammer (15) zugewandt sind, die jeweils mit zylindrischen Oberflächen (42, 52) bereitgestellt sind, die sich mit dem gleichen Innendurchmesser in eine Richtung einer Ventilachse (O2) auf der Ventilachse (O2) zentriert erstrecken;
Ventilsitze (45, 55), die jeweils als Ring geformt und konfiguriert sind, auf die zylindrischen Oberflächen (42, 52) aufgesetzt zu werden, wobei Innenumfangsoberflächen der Ventilsitze (45, 55) Sitzoberflächen (46, 56) werden, die auf der Ventilachse (O2) zentriert sind;
verjüngte Oberflächen (43, 53), die für die Öffnungsabschnitte (41, 51) bereitgestellt und näher an der Verbrennungskammer (15) angeordnet sind als die Sitzoberflächen (46, 56), wobei die Durchmesser der verjüngten Oberflächen (43, 53) hin zu der Verbrennungskammer (15) schrittweise erhöht werden, und
eine Dachoberfläche (32), die einer Seite eines Zylinderblocks (10) des Zylinderkopfkörpers (31) zugewandt ist und eine flache Form senkrecht auf die Zylindermittelachse (O1) aufweist,
wobei eine Mittelachse (O3) der verjüngten Oberfläche (43) exzentrisch von der Ventilachse (O2) hin zu der Zylindermittelachse (O1) angeordnet ist und
der Motor (1) weiter einen Zylinderblock (10) umfasst, der eine Innenwandoberfläche (11) aufweist, die zusammen mit einem Zylinderkopf (30) die Verbrennungskammer (15) bildet,
wobei
Innendurchmesser offener Kanten der verjüngten Oberflächen (43, 53), die einander kreuzende Kammlinien zwischen den verjüngten Oberflächen (43, 53) und einer Dachoberfläche (32) des Zylinderkopfes (30) sind, eingerichtet sind, größer zu sein als Innendurchmesser der zylindrischen Oberflächen (42, 52),
wobei
die Dachoberfläche (32) des Zylinderkopfkörpers (31) an einer Stirnfläche (12) des Zylinderblocks (10) anstößt;
und wobei
die verjüngten Oberflächen (43, 53) angeordnet sind, bei Betrachtung in der Zylindermittelachse (O1) des Motors (1) auf einer radialen Innenseite der Innenwandoberfläche (11) des Zylinderblocks (10) vorzuliegen; **dadurch gekennzeichnet,**
**dass** in allen Ansaug- (40) und Abgasanschlüssen (50) die offenen Kanten der verjüngten Oberflächen (43, 53) bei Betrachtung in der Zylindermittelachse (O1) des Motors (1) an den zylindrischen Oberflächen (42, 52) in den von der Zylindermittelachse (O1) an dem weitesten getrennten Teilen anstoßen; und
ein Vorkammerdeckel (80) in einer Mitte der Dachoberfläche (32) des Zylinderkopfkörpers (31) angeordnet und mit Ausstoßlöchern (83) bereitgestellt ist, durch die Flammen in die Verbrennungskammer (15) ausgestoßen werden, wobei die Flammen durch Entzündung eines in einen Innenhohlraum des Vorkammerdeckels (80) gespeisten Vorkammergases verursacht werden.

## Revendications

1. Moteur (1) comprenant:
un corps de culasse (31) doté d'orifices d'admission (40) et d'échappement (50) ouverts vers une chambre de combustion (15) et aptes à être fermés par des soupapes (60, 70), les orifices d'admission et d'échappement (40, 50) étant séparés l'un de l'autre dans une direction circonférentielle autour d'un axe central de cylindre (O1);
des sections d'ouverture (41, 51) des orifices d'admission (40) et d'échappement (50) tournées vers la chambre de combustion (15) qui sont chacune dotées de surfaces cylindriques (42, 52) qui s'étendent avec le même diamètre intérieur dans une direction d'un axe de soupape (O2) centré sur l'axe de soupape (O2);
des sièges de soupape (45, 55) formés chacun comme un anneau et configurés pour être insérés sur les surfaces cylindriques (42, 52), dans lesquelles des surfaces circonférentielles intérieures des sièges de soupape (45, 55) deviennent des surfaces de siège (46, 56) centrées sur l'axe de soupape (O2);
des surfaces effilées (43, 53) prévues sur les sections d'ouverture (41, 51) et disposées plus près de la chambre de combustion (15) que les surfaces de siège (46, 56), les surfaces effilées (43, 53) étant augmentées progressivement en diamètre vers la chambre de combustion (15), et
une surface de toit (32) qui fait face à un côté d'un bloc-cylindres (10) du corps de culasse (31), et présente une forme plate perpendiculaire à l'axe central de cylindre (O1),
dans lequel un axe central (O3) de la surface effilée (43) est disposé excentriquement de l'axe de soupape (O2) vers l'axe central de cylindre (O1), et
le moteur (1) comprend en outre le bloc-cylindres (10) présentant une surface de paroi intérieure (11) qui forme la chambre de combustion (15) avec une culasse (30),
dans lequel
des diamètres intérieurs d'arêtes ouvertes des surfaces effilées (43, 53) qui sont des lignes de crête se croisant entre les surfaces effilées (43, 53) et une surface de toit (32) de la culasse (30) sont réglés de sorte à être supérieurs aux diamètres intérieurs des surfaces cylindriques (42, 52),
dans lequel la surface de toit (32) du corps de culasse (31) bute contre une face d'extrémité (12) du bloc-cylindres (10) ;
et dans lequel
les surfaces effilées (43, 53) sont disposées de sorte à être présentes sur un côté intérieur radial de la surface de paroi intérieure (11) du bloc-cylindres (10) lorsque vu dans l'axe central de cylindre (O1) du moteur (1) ; **caractérisé en ce que** dans l'ensemble des orifices d'admission (40) et d'échappement (50), les arêtes ouvertes des surfaces effilées (43, 53) butent contre les surfaces cylindriques (42, 52) sur les portions les plus séparées de l'axe central de cylindre (O1) lorsque vu dans l'axe central de cylindre (O1) du moteur (1) ; et
un capuchon d'antichambre (80) est disposé dans un centre de la surface de toit (32) du corps de culasse (31) et doté de trous d'éjection (83) par lesquels des flammes sont éjectées dans la chambre de combustion (15), les flammes étant provoquées par l'allumage d'un gaz d'antichambre fourni à une portion creuse intérieure du capuchon d'antichambre (80).
